# EUROPEAN PATENT SPECIFICATION

(11) **EP 2 284 491 B1**
(45) Date of publication and mention of the grant of the patent: **03.04.2013**
(21) Application number: 09010527.1
(22) Date of filing: 14.08.2009
(51) Int. Cl.: G06F 21/00, G01C 21/36, G07C 9/00

(54) **Key of a vehicle and a navigation device**
Schlüssel eines Fahrzeugs und ein Navigationsgerät
Clé de véhicule et dispositif de navigation

(43) Date of publication of application: 16.02.2011
(73) Proprietor: Harman Becker Automotive Systems GmbH, 76307 Karlsbad (DE)
(72) Inventor: Rinscheid, Ansgar, 21509 Glinde (DE)
(74) Representative: Grünecker, Kinkeldey, Stockmair & Schwanhäusser

(56) References cited:
- DE-A1- 10 142 836
- DE-A1- 10 317 499
- DE-A1- 10 354 515
- DE-A1-102005 030 081
- FR-A1- 2 882 713
- US-A1- 2008 034 223
- US-A1- 2008 150 679
- US-A1- 2008 172 740
- US-A1- 2009 132 739
- US-B2- 7 082 483

## Description

The invention is directed to a key of a vehicle and a navigation device for providing a navigation service.

In order to select a route for a vehicle to guide it to a desired destination, vehicles quite often are equipped with navigation devices. Such a navigation device comprises a software, and has access to map data. The software enables the navigation device to evaluate the map data to find an appropriate route from a starting point to the destination. However, the availability of roads may change with time: new roads may be put into operation, existing roads may be closed for vehicles, or may be changed to one-way roads. Hence, to permit proper operation of a navigation device, up-to-date map data have to be provided to the navigation device from time to time. Processing of amended map data may also require to update, from time to time, the software instructions executed by the navigation device.

New map data and/or a new software instructions may be provided to the user on computer-readable media; often, CD-ROMs are used for that purpose. Then, it is left to the user to insert the computer-readable media into the navigation device and start updating it by transferring the new map data and/or new software instructions to the navigation device. However, the user has to handle the CD very carefully to protect it from dirt and scratches which would render it useless. Moreover, the user has to refer to the instruction manual of the navigation system to learn how to operate the navigation device such that an update of data or software instructions can be performed. This makes updating the navigation system an awkward task for the user.

Document US 2008/0150679 A1 discloses a remote keyless entry device with integrated accessible memory storage.

Document DE 10 2005 030 081 A1 discloses system for a keyless activation of the locking mechanism of a vehicle.

Document FR 2 882 713 A1 discloses a combination for a vehicle comprising a multimedia system and a corresponding vehicle.

In view of this, there is a need for a way which provides an easier way for the user to update data and/or software instructions of a navigation system in a vehicle.

To satisfy this need, the invention provides a key of a vehicle according to claim 1, a and a system for providing a navigation service to a user of a key of a vehicle according to claim 4. Moreover, the invention provides a method of providing a navigation service to the user of a key of a vehicle according to claim 13.

In particular, the invention provides a key of a vehicle, wherein the key comprises a memory storing data for a navigation device of the vehicle wherein the data comprise instructions for execution by the navigation device and/or map data to be used by the navigation device.

It should be understood that the term "navigation device" is used in this description synonymously with the term "navigation system".

This key stores, in its memory, instructions (i.e. software code) which are to be executed by the navigation device, and/or map data to be used by the navigation device. Therefore, such a key can serve as a way of supplying, to the user of a vehicle with a navigation device, up-to-date data, i.e. software code and/or map data. To obtain new data, the user may be provided with a new key of the user's vehicle. As the user may use the key to start the vehicle, there is the opportunity for the navigation system to access and/or copy the data stored in the memory of the key without the need for the user to make any explicit efforts to update the navigation system. The navigation system may use the data obtained from the key to provide the navigation service.

The vehicle may be a road vehicle. In particular, the vehicle may be a car, a bus, a lorry or a van. In particular, the key of the vehicle may be a car key. Usage of the key may be required to put the vehicle into operation.

At least a part of the data stored in the key is compressed. Accessing the data may require providing a password. In this way, the key may be able to store map data of a large area even in a limited amount of memory. By encrypting the data, it can be ensured that the content of the memory cannot be read and used by any unauthorized person. Instead, a user of the data may have to provide a proper cryptographic key to decrypt the stored data. By decrypting, the data may be rendered into a format suitable for use by the navigation device to provide the navigation service. Encrypting and decrypting the data may be accomplished by use of a symmetric key cryptographic method, or by use of a cryptographic method involving cryptographic public and private keys.

The key comprises access means configured to perform decompressing data. Such access means may include a CPU or a microprocessor. By including access means into the key, it may be possible to store the data in the memory of the key in an encrypted and/or compressed format. At the same time, the data may be obtained from the key in a format which can be used for providing the navigation service without the need that the receiver of the data carried out any decompression and/or decryption. This may be of advantage in a case where the receiver, for example, the navigation device, has limited processing capacity. The data to be stored in the memory of the key may be encrypted and/or compressed by the access means. The data may be obtained from the internet, and then be stored in the memory of the key, wherein the access means may perform compression and/or encryption of the data.

The key according to the invention further comprises an interface configured to provide access to the data stored in the memory of the key, wherein the interface is configured to enable access via a wired data connection.

The interface of the key may be used to attach the key to an interface of the navigation device. The interface of the key may be configured to enable a wired data connection to the navigation device via the interface of the navigation interface.

The key comprises at least one verification feature which allows verifying the key by a verification device. Verification features may be a cryptographic key or a password. Verifying a cryptographic key or a password may comprise comparing it to a reference value. Verifying a cryptographic key may comprise checking whether the cryptographic key (e.g., a cryptographic public key) corresponds to another cryptographic key (e.g., a cryptographic private key). The cryptographic key or password to be verified may be stored in the memory of the key. Putting the vehicle into operation may be dependent on providing an appropriate cryptographic key or password. Putting the vehicle into operation may also be dependent on being able to put a bit of the key into a lock and being able to turn the key in the lock.

The at least one verification feature of the key according to the invention may include the shape of the key, in particular, the form of a bit of the key, and/or electronic verification data stored in the memory of the key. The electronic verification data may be stored in the memory of the key. Electronic verification data may be compressed and/or encrypted. The verification device and/or the navigation device may be able to decompress/decrypt electronic verification data. The access means of the key may be configured to compress/decompress and/or encrypt/decrypt electronic verification data. The key may be a key with a bit. The key may be verified by being able to turn it when putting the bit of the key into a lock. The key may also be an electronic key, comprising electronic verification data. Electronic verification data may be derived from other data stored in the memory of the key.

The electronic verification data comprises a hash value. The hash value is computed based on the instructions and/or the map data stored in the memory of the key. The hash value may be encrypted using a cryptographic key, in particular, a cryptographic public key or a cryptographic private key.

The memory of the key according to the invention may store information relating to a configuration of the navigation device. Such information may comprise a preferred area where the car may be put into operation, and/or a preferred area where the car will be preferably located. Information relating to the configuration of the navigation device may comprise route preferences, settings for language and/or settings for the user interface of the navigation device.

The memory of the key according to the invention may store information relating to a configuration of an external device in the vehicle, wherein a list of external devices may comprise: a device for controlling seat position, a device for controlling mirror orientation, a radio, a device for network access, a multimedia device.

The navigation device is configured to provide a navigation service using data stored in the memory of a key of a vehicle, wherein the data comprise instructions for execution by the navigation device and/or map data for use by the navigation device. The navigation device may comprise a memory. The memory of the navigation device may be semiconductor memory, for example, volatile memory, flash memory, a flash drive, or the memory of a memory stick. The memory of the navigation device may also include a mass storage medium, for example, a hard disk or some kind of optical storage medium like a CD-ROM or a DVD. The memory of the navigation device may be configured to store at least a part of the instructions to be executed and/or of the map data to be used. The navigation device may be configured to access data obtained from the key to provide the navigation service. The data may be accessed, in particular, via an interface of the key. The interface of the key may be the above-mentioned interface of the key configured to provide access to the data stored in the memory of the key.

The navigation device may be configured to access data obtained from the key to provide the navigation service. The data may be obtained by directly accessing the memory of the key and copying them from the memory. The process of copying may comprise decrypting and/or decompressing the data. The obtained data may be decompressed and/or decrypted by access means comprised in the key. The navigation device may be able to decompress/decrypt electronic verification data stored in the memory of the key.

The navigation device may be configured to perform copying data obtained from the key to a memory of the navigation device. The data may be obtained from the memory of the key. The data may be decrypted/decompressed by access means in the key. The obtained data may be stored in a memory of the navigation device.

The navigation device may be configured to decrypt data obtained from the key. The navigation device may store a part or all of the obtained data from the key to a memory of the navigation device, and then decrypt the copied data. The navigation device may also obtain data from the memory of the key and decrypt and/or decompress them before storing them in a memory. The navigation device may also first decrypt data obtained from the key, then store the resulting data in a memory of the navigation device, and then decrypt the stored data.

The navigation device may be configured to execute instructions stored in the memory of the key, and/or to access map data stored in the memory of the key to provide the navigation service. To save resources of the navigation device, the navigation device need not provide memory for storing instructions and/or map data for providing the navigation service. The navigation device may access the memory of the key via the above-mentioned interface of the key. The key comprises access means which performs decompressing and optionally decrypting of the data stored in the memory of the key prior to forwarding the decompressed and/or decrypted data to the interface of the key. The access means may permit the navigation device to obtain, from the interface of the key, data which are not compressed and/or not encrypted, while at least a part of the data stored in the memory of the key are compressed and/or encrypted.

The navigation device may have a memory which may be configured to store at least a part of the instructions to be executed and/or of the map data to be used. In particular, the instructions to be executed and/or the map data to be used may be stored in the memory of the navigation device prior to being used for providing the navigation service. The navigation device may check if the instructions and/or map data stored in the memory of the navigation device correspond to the instructions and/or map data provided by the key. If the instructions and/or map data stored in the memory of the navigation device correspond to the instructions and/or map data provided by the key, then the navigation device may use the instructions and/or map data stored in the memory of the navigation device for providing the navigation service. The memory of the navigation device may keep its content if the navigation device is without power. The memory of the navigation device may be a flash memory. If more recent instructions and/or map data than the instructions and/or map data stored in the memory of the navigation device are provided by the key, the navigation device may store the more recent instructions and/or map data in its memory.

The navigation device may be configured to perform at least one of decrypting, encrypting, compressing, decompressing data stored in the memory of the navigation device. In particular, the navigation device may be configured to decompress and/or decrypt instructions and/or map data and/or verification features and/or version descriptors.

Data stored in the memory of the navigation device may be associated with a device version descriptor, and data stored in the memory of the key may be associated with a key version descriptor. A version descriptor may be a data item which indicates the version of data it is associated with. The key version descriptor may be stored in the memory of the key. The device version descriptor may be stored in the memory of the navigation device. The navigation device may be configured to provide the navigation service based on the data stored in the memory of the key if the key version descriptor corresponds to a more recent version than the device version descriptor. The navigation device may update part or all of the data stored in the memory of the navigation device when the key version descriptor corresponds to a more recent version than the device version descriptor. Updating data may comprise replacing at least a part of the instructions and/or map data stored in the memory of the navigation device by instructions and/or map data obtained from the key. The navigation device may replace instructions/map data stored in the navigation device by instructions/map data obtained from the key if the version descriptor associated with the instructions/map data in the key is more recent than the version descriptor associated with the instructions/map data stored in the navigation device. The version descriptors may be compressed and/or encrypted.

There may be a first key version descriptor associated with instructions stored in the memory of the key, and a first device version descriptor associated with instructions stored in the memory of the navigation device. Alternatively or in addition, there may be a second key version descriptor associated with the map data stored in the memory of the key, and a second device version descriptor associated with map data stored in the memory of the navigation device. The navigation device may update a part or all of the instructions based on the first key version descriptor and the first device version descriptor associated with instructions. Alternatively or in addition, the navigation device may update a part or all of the map data based on the second key version descriptor and the second device version descriptor associated with the map data. Updating of instructions and/or map data may be carried out automatically, with or without consent of the user. Updating of instructions and/or map data may be carried out as soon as a key version descriptor associated with instructions and/or map data, which corresponds to a more recent version than a device version descriptor associated with instructions and/or map data, is detected.

The navigation device may be configured to use instructions and map data to provide the navigation service, and the navigation service may be provided only if a first version descriptor associated with the instructions to be used corresponds to a second version descriptor associated with the map data to be used. A version descriptor may be a data item which may indicate the version of data it is associated with. In particular, a version descriptor may indicate the version of instructions associated with the version descriptor and/or the version of map data associated with the version descriptor. In this way, it may be ensured that the instructions used to provide the navigation service may be applied to that map data which they are designed for. The navigation device may store instructions and/or map data together with their version descriptor/s in its memory. The navigation device may check if a version descriptor associated with the instructions stored in the navigation device corresponds to a version descriptor associated with map data provided by the key . The navigation device may check if a version descriptor associated with map data stored in the navigation device corresponds to a version descriptor associated with instructions stored in the key. The navigation device may replace instructions/map data stored in the navigation device by such instructions/map data obtained from the key, whose associated version descriptor may correspond to a more recent version than the version descriptor of the map data/instructions stored in the navigation device.

The invention further provides a system for providing a navigation service to a user of a key of a vehicle, comprising a key as described above, and a navigation device as described above.

The system according to the invention may further comprise a verification device configured to verify the key via at least one verification feature. In particular, the at least one verification feature may be the at least one verification feature comprised in the key which has been mentioned above. The verification device may comprise a mechanical lock verifying the key by checking a bit of the key, and/or may check verification data stored in the memory of the key. The verification device may be an electronic device. Verification data to be checked may be read from the memory of the key. The verification device may decide if the key entitles its user to put the vehicle and/or the navigation device into operation, based on at least one verification feature.

In the system according to the invention, the verification device may be configured to provide a data connection between the interface of the key and the navigation device. The verification device may access data stored in the memory of the key, in particular, via the interface of the key. The verification device may be configured to access the interface of the key via a wired or wireless connection. The connection may be wired, for example, by a bus, or may be wireless to increase the flexibility of arranging the verification and the navigation device. The verification device may provide the connection only if the key has been verified successfully before.

The verification device may signal to the navigation device that a connection to the interface of the key has been established. The navigation device may then obtain data from the key via the connection provided by the verification device.

The interface of the key may be attached to an interface of the verification device. The interface of the verification device may be an interface where the key has to be attached to to put the vehicle into operation.

The interface may be an electronic interface or a mechanical interface. The electronic interface permits wired access to the verification interface. In addition, the interface of the verification device is a mechanical interface permitting verification of the key by mechanical means. For example, the interface of the verification device may be a lock, verifying the key by its bit. The interface may be the bit of the key.

The verification device may ensure that the user of the key is entitled to put the vehicle into operation. Alternatively or in addition, the verification device may ensure that the user of the key is entitled to use the navigation service. The verification device may be a lock in the vehicle, verifying that a bit of a key can be inserted into the lock. The verification device may also be an electronic device configured to verify a cryptographic key or a password.

The data connection between the key and the navigation device via the interface of the key may be enabled when the interface of the key is attached to the interface of the verification device. Enabling the data connection may require that the vehicle is put into operation. Attaching the interface of the key to the interface of the verification device may put the vehicle into operation. The verification device may be able to decompress/decrypt electronic verification data.

In the system according to the invention, the key has a bit, and the verification device may be the lock of the vehicle. The lock of the vehicle may be the device which has to be operated to put the vehicle into operation.

In the system according to the invention, the verification device may be configured to forward data obtained from the key to the navigation device. The verification device may obtain data from the key to be forwarded, in particular, via the interface of the key. The verification device may comprise an interface where the interface of the key may be attached to for accessing the key. The verification device may read data from the memory of the key. The verification device may obtain data from the key which have been decompressed and/or decrypted by access means in the key. The verification device may optionally perform decompression and/or decryption of the obtained data. The verification device may forward the resulting data to the navigation device.

The verification device may trigger the navigation device to accept data. The verification device may send data to the navigation device in blocks of data. After sending an amount of data, the verification device may wait for a confirmation by the navigation device prior to sending more data. The navigation device may signal to the verification device whether it is ready to receive data, or whether it is not ready to receive data. The verification device may, in particular, forward instructions for providing the navigation service, map data, information relating to a configuration of the navigation device and version descriptors associated with instructions for providing the navigation service and/or with map data. If data are stored in the key which relate to the configuration of an external device in the vehicle, the verification device may forward data relating to the configuration of an external device to the external device. A list of external devices in the vehicle for which configuration information may be forwarded may comprise: a device for controlling seat position, a device for controlling mirror orientation, a radio, a device for network access, a multimedia device.

In the system according to the invention, the navigation device may be configured to decrypt and/or to decompress data forwarded by the verification device, and/or the verification device may be configured to decrypt and/or to decompress data prior to forwarding them. Decryption and/or decompression may be performed, by the verification device, while data are stored temporarily in a storage of the verification device, or may be performed during forwarding the data without storing them in the verification device.

In the system according to the invention, the navigation device may be configured to store data forwarded by the verification device in a memory of the navigation device. The memory of the navigation device may be the memory which may be configured to store at least a part of the instructions to be executed and/or of the map data to be used, which has been mentioned above. If the navigation device does not have a memory, then no data may be stored in the navigation device and/or no data may be forwarded to the navigation device by the verification device.

The navigation device may decrypt and/or decompress forwarded data prior to storing them, or may store forwarded data in its memory prior to decrypting/decompressing them.

The invention also provides a method of providing a navigation service to the user of a key of a vehicle, wherein the key comprises a memory, the method comprising accessing data obtained from the memory of the key, wherein the data comprise instructions for execution by the navigation device, and/or map data for use by the navigation device, and executing the obtained instructions and/or using the obtained map data by the navigation device to provide the navigation service.

The data in the key is accessed via an interface of the key. The interface may permit access to the memory of the key. Storing data in the memory of the key comprises compressing the data.

The method according to the invention may further comprise a step of providing a password to obtain access to the data. The password may be checked by access means comprised in the key. The access means decompresses and optionally decrypts data which are stored in the memory of the key.

The method according to the invention further comprises establishing a wired data connection between the key and the navigation device. Establishing the wired data connection comprises sending signals through the conductive bit of the key. Establishing the wired data connection may comprise connecting an interface of the key to an interface of the navigation device. The interface of the key provides access to the memory of the key. The interface of the navigation device may comprise the lock of the vehicle.

The method according to the invention may further comprise copying data from the key to a memory of the navigation device, wherein copying may comprise decrypting and/or decompressing the data. The decrypting and/or decompressing may be executed by access means comprised in the key. Alternatively or in addition, decrypting and/or decompressing may be performed by the navigation device.

The method according to the invention may further comprise: establishing a wired data connection between the key and a verification device for verifying the key, and forwarding data to the navigation device by the verification device, wherein forwarding data may comprise decrypting and/or decompressing the data. The verification device may check whether the user of the key is entitled to put the vehicle into operation, based on verification features of the key. Verification features of the key may include the form of the bit of the key, or cryptographic data stored in the memory of the key. Cryptographic data may comprise a cryptographic symmetric key, a cryptographic public key, a cryptographic private key, or a hash value.

The key, the navigation device and the system introduced above may be configured such steps of the methods according to the invention may be carried out be those components of the system.

Further Aspects of the invention will be described below with reference to the attached figures.
- Figure 1: illustrates an example of an electronic key.
- Figure 2: illustrates an example of a key with a bit in accordance with the invention.
- Figure 3: illustrates an example of a system, including a navigation device and a key of a vehicle.
- Figure 4: illustrates the operation of the exemplary system of Figure 3.
- Figure 5: illustrates an example of a system according to the invention, including a key of a vehicle, a lock and a navigation device.
- Figure 6: illustrates the operation of the exemplary system of Figure 5.
- Figure 7: illustrates a further example of a system, including a key of a vehicle, a verification device and a navigation device.
- Figure 8: illustrates the operation of the exemplary system of Figure 7.
- Figure 9: illustrates another example of a system, including a key of a vehicle, a verification device, a navigation device, and an external device.

Exemplary embodiments of the invention illustrated by the Figures are described in the following.

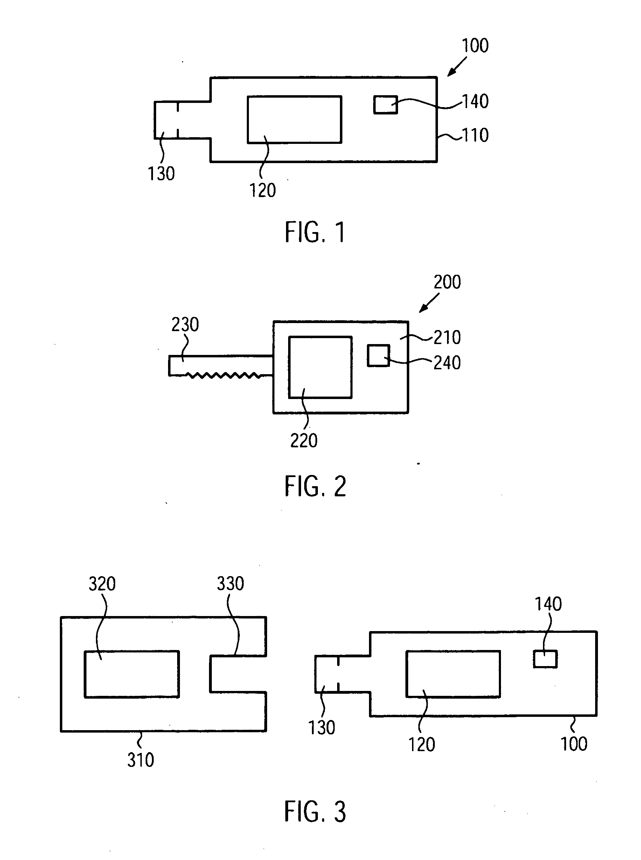

Figure 1 illustrates an electronic key 100 of a vehicle in accordance with the invention. The body 110 of the electronic key 100 comprises a memory 120. The electronic key 100 may be equipped with a plug providing the hardware for an interface 130 of the electronic key 100 which may be connected to a corresponding interface of a vehicle comprising a navigation device. This interface may be an electronic lock of the vehicle where the key has to be attached to to put the vehicle in operation. In the memory 120 of the electronic key 100, data which allow verification of the key are be stored. The electronic key 100 may further comprise an access component 140 which is able to compress, decompress, encrypt or decrypt data stored in the memory 120 of the electronic key 100.

Figure 2 illustrates a key 200 as an exemplary embodiment of a key of a vehicle comprising a navigation device in accordance with the invention. The conventional key has a bit 230 comprising electrically conducting material, and a handle 210. The bit 230 is shaped in a particular way which allows identifying the conventional key 200. For example, the bit 230 of the conventional key may be shaped such that the conventional key 200 can be inserted into a corresponding lock and permits turning that lock, in particular, the lock of the vehicle. Inserting the key into the lock and/or turning it may be required to put the vehicle into operation. The lock may be used as a verifying device, as only a key with a proper bit can be inserted into the lock and, for example, enable turning the lock. The conventional key 200 has a memory 220 which may be embedded inside its handle 210. The memory 220 in the conventional key 200 can be accessed electrically via the bit 230 of the conventional key 200 which is be electrically conducting. In this way, the bit 230 of the conventional key serves as an interface to the memory 220 of the key. The conventional key 200 further comprises an access component 240 which may be able to compress, decompress, encrypt or decrypt data stored in the memory 220 of the conventional key 200.

The access component (140, 240) of the electronic key 100 as well as the conventional key 200 may ensure that access to the memory in the key may be accomplished only if a password has been provided to the respective access component . Providing the password may be performed via the interface (130, 230) of the key. The access component (140, 240) may also perform decryption of data stored in the memory of the key. Alternatively or in addition, the access component (140, 240) may perform decompression of data stored in the memory (120, 220) of the key (100, 200). The access component (140, 240) may also compress data and/or may encrypt data which are to be stored in the memory (120, 220) of the key.

An exemplary system including a key is illustrated in Figure 3. The system comprises a navigation device 310 and an electronic key 100 with a plug, which serves as interface 130 permitting access to data stored in the memory 120 of the electronic key. The navigation device 310 includes an interface 330 and memory 320. The memory 320 of the navigation device 310 is configured so as to keep its content even when the navigation device is disconnected from electrical power. The memory 320 may be a flash memory. In this embodiment, the memory 120 of the key has stored map data together with a version descriptor of the map data. The map data are compressed.

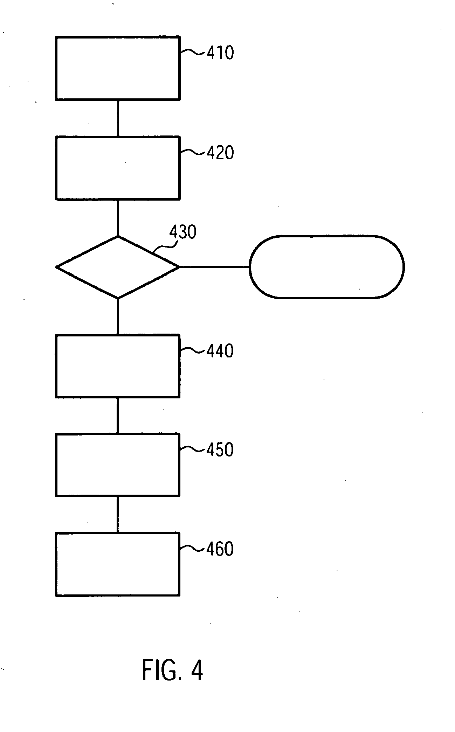

In the exemplary system of Figure 3, operation may be as depicted in Figure 4. In step 410, the plug of the electronic key with the interface 130 of the key is attached to the interface 330 of the navigation device 310. After attaching the interface 130 to the interface 330 of the navigation device, the vehicle is put into operation. As soon as the vehicle is put into operation, the navigation device 310 accesses the map data stored in the memory 120 of the key via its interface 330 and the interface 130 of the key integrated into the plug.

Then, in step 420, the navigation device 310 reads the version descriptor of the map data stored in the memory 120 of the key 100. Furthermore, the navigation device 310 obtains a current version descriptor associated with the map data which it has currently stored in its memory 320. In step 430, the navigation device compares the current version descriptor with a version descriptor obtained from the memory 120 of the key and associated with the map data in the key. If the version descriptor obtained from the memory 120 of the key 100 indicates a more recent version than the current version descriptor, for example, by indicating a higher version number, the navigation device 310 continues operation at step 440.

In step 440, the navigation device 310 copies the map data from the memory 120 of the key 100 to the memory 320 in the navigation device 310. In the process of copying, the data obtained from the memory 120 of the key 100 device are decompressed, if they have been stored in a compressed format in the memory 120 of the key 100. Decompressing of the data may be executed by the navigation device, or by the access means 140 in the key. The obtained may data are stored in the memory 320 of the navigation device 310. The obtained map data may replace the map data stored in the memory of the navigation device.

After the new map data have been decompressed and have been stored in the memory 320 of the navigation device 310, then, in step 450, the currently stored map data may be deleted, and the current version descriptor is be replaced by the version descriptor obtained from the memory 120 of the key 100.

Finally, in step 460, the navigation device 310 provides the navigation service based on the map data obtained from the key.

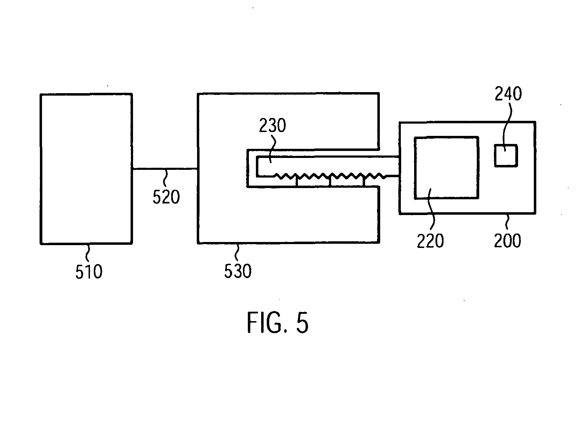

An embodiment of a system with a key according to the invention is illustrated in Figure 5. This system comprises the navigation device 510 and a conventional key 200 with a bit 230, wherein the bit 230 is made of conductive material. In addition, the lock 530 of a vehicle is present in the system. This lock may be the lock for putting the vehicle into operation. A wired data connection 520 exists between the lock 530 and the navigation device 510. In this embodiment, the memory 220 of the key 200 comprises instructions as well as map data which are required by the navigation system 510 to provide the navigation service. The memory 220 of the key 200 also has stored an encrypted hash value based on the instructions and map data stored in the memory of the key. In addition, a first key version descriptor corresponding to the instructions stored in the memory 220 of the key, and a second key version descriptor corresponding to the map data stored in the memory 220 of the key is comprised in the memory 220 of the key.

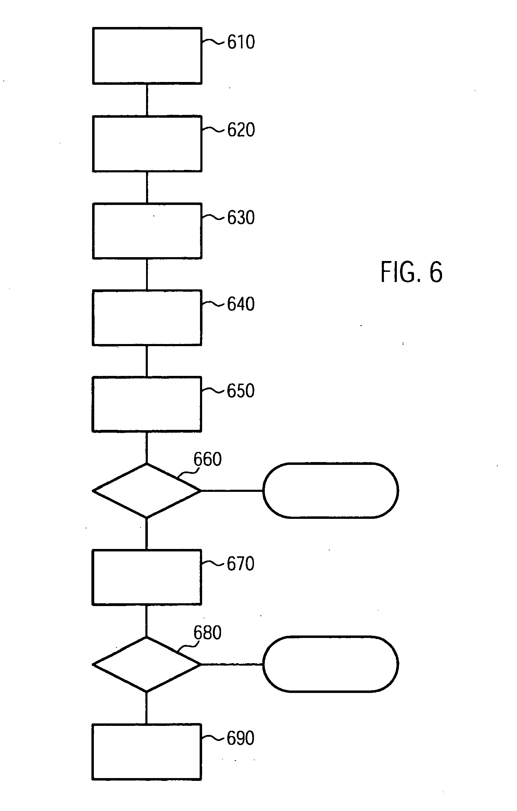

The operation of the system is illustrated by Figure 6. In step 610, the bit 230 of the key 200 is put into the lock 530. Then, the key 200 is turned in the lock 530. When the turn is completed, the vehicle is put into operation. Then, the navigation system 510 establishes access to the memory 220 in the conventional key 200 in step 620, for example, by accessing the memory 220 via the connection 520 to the lock 530 which provides the electrical connection to the electrically conducting bit 230. The lock 530 provides an electrical connection to the bit 230 of the key 200 as soon as the key 200 has been turned in the lock 530. In step 630, the navigation system 510 obtains the encrypted hash value from the memory 220 of the key 200. The hash value is encrypted with a cryptographic private key which is associated with the manufacturer of the vehicle to which the key belongs.

Then, in step 640, the navigation device 510 provides a cryptographic public key stored in the navigation device at an earlier time, and decrypts the encrypted hash value using the cryptographic public key. In step 650, the navigation device computes a hash value based on the instructions and the map data comprised in the memory 230 of the key 200. The computed hash value and the decrypted hash value are compared in step 660.

If both hash values are identical, then the navigation device 510 reads the first key version descriptor associated with the instructions stored in the memory of the key and the second key version descriptor associated with the map data stored in the memory of the key in step 670. To ensure that instructions and map data may be used together, both version descriptors are compared in step 680. If both version descriptors correspond to each other, for example, if they are identical, then the navigation device 510 starts providing the navigation service in step 690. For providing the navigation service, the navigation device executes instructions stored in the memory of the key, and accesses map data stored in the memory of the key as well.

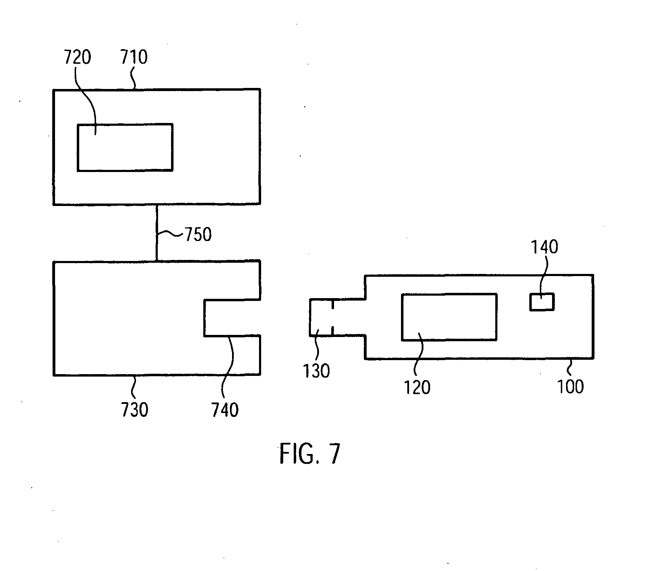

Figure 7 illustrates a system with a key. The system comprises an electronic key 100 with a plug, comprising an interface 130 to its memory 120 in accordance with the invention, as described above. In this embodiment, instructions permitting the navigation device 710 providing the navigation service are in the memory 120 of the key 100, together with a version descriptor of the instructions. The instructions are encrypted with a cryptographic symmetric key, and the encrypted instructions are compressed. The cryptographic symmetric key itself is encrypted with a private cryptographic key, which is associated with the manufacturer of the vehicle to which the key belongs. The encrypted cryptographic symmetric key is stored in the memory of the key as well. Further, the system has a verification device 730 with an interface 740, to which the interface 130 of the electronic key 100 is attached. The verification device 730 is electrically connected to the navigation device 710 via connection 750. The navigation device 710 comprises a memory 720 which is configured to keep its content even if the navigation device is disconnected from electrical power. The memory 720 may be a flash memory.

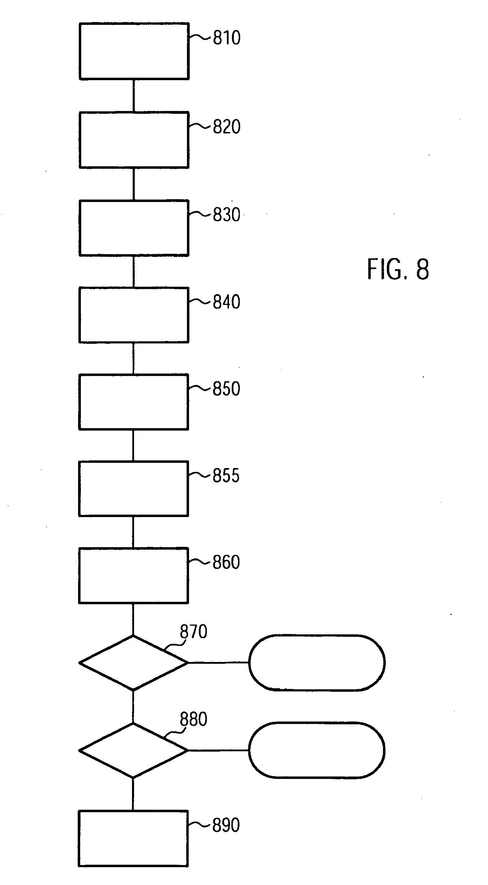

Operation of this system is illustrated by Figure 8. In step 810, the interface 130 of the electronic key 100 is connected to the interface 740 of the verification device 730. In step 820, the verification device 730 verifies the key. Then, the verification device establishes a connection to the memory 120 of the key via its interface 740, where the interface 130 of the key 100 is attached to. Then, at step 830, the verification device 730 reads the encrypted cryptographic symmetric key from the memory 120 of the key. By using a cryptographic public key, which corresponds to the manufacturer of the vehicle and is stored in the verification device 730, the verification device 730 decrypts the cryptographic symmetric key. Next, at step 840, the verification device 730 signals to the navigation device 710 via the connection 750 between them that new instructions (i.e. a new program code) for providing the navigation service will be transmitted.

In step 850, the verification device 730 obtains a block of instructions comprising at least one instruction from the memory 120 of the key, decompresses the block and decrypts the decompressed block using the cryptographic symmetric key. Then, the block of decompressed and decrypted instructions are forwarded to the navigation device 710. In step 855, the navigation device accepts the block of instructions and stores the received instructions in its memory 720. Steps 850 and 855 are continued until all the instructions in the memory 120 of the key 100 have been processed.

Then, the verification device 730 obtains a key version descriptor associated with the stored instructions from the memory 120 of the key 100 and forwards it to the navigation device 710 in step 860. In step 870, the navigation device 710 compares the key version descriptor received from the verification device 730 and checks if it corresponds to a more recent version than the current version descriptor associated with the instructions currently stored in the memory of the navigation device. For example, the key version descriptor may comprise a higher number. The current version descriptor has been stored earlier in the navigation device 710.

In addition, in step 880, the navigation device 710 compares the key version descriptor received from the verification device 730, which is associated with the instructions stored in the key, with a version descriptor associated with the map data which are currently stored in the memory of the navigation device. The navigation device 710 checks if the key version descriptor received from the verification device 730 corresponds to the version descriptor of the map data currently stored in the memory of the navigation device. For example, the key version descriptor may indicate a version range which includes a number comprised in the version descriptor of the currently stored map data.

If both checks are successful, i.e. if the key version descriptor received from the verification device 730 corresponds to a more recent version than the version descriptor of the currently stored instructions, and if the key version descriptor corresponds to the version descriptor of the currently stored map data, then the navigation device 710 replaces the currently stored instructions in its memory by the received instructions in step 890. The version descriptor of the most recently used instructions is replaced by the version descriptor received from the verification device 730. From then on, the navigation device 710 may provide the navigation service based on the received instructions.

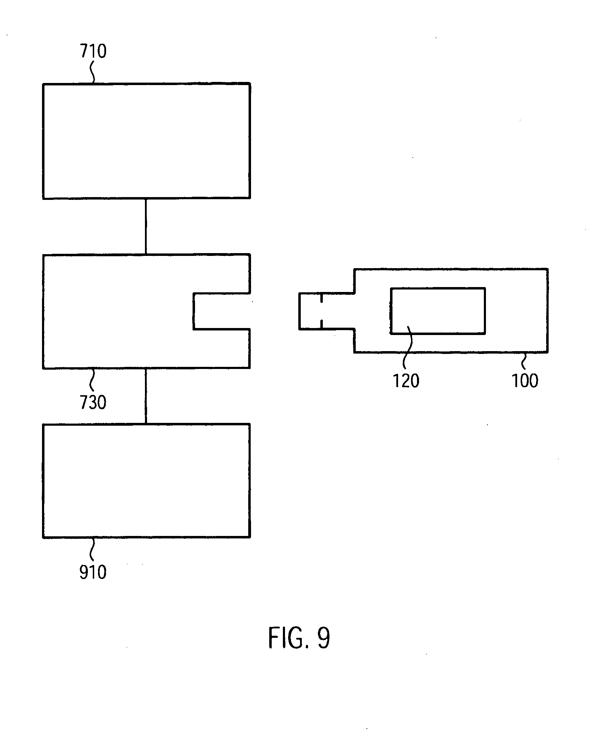

A further example is illustrated by Figure 9. There, the system comprises, besides a key 100, a navigation device 710 and a verification device 730, an additional external device 910, which may be a device, in a vehicle, for controlling seat position or mirror orientation, or a radio, or a device for network access, or a multimedia device. The verification device 730 in this embodiment is configured to recognize the intended receiver of at least a part of the data stored in the memory 120 of the key 100. The verification device 730 is configured to forward data obtained from the memory 120 of the key 100 to the intended receiver of that data. The intended receiver of that data may be the navigation device 710, or the external device 910, or another external device. There may be more than one external device which are attached to the verification device.

The above described embodiments are to be construed as exemplary embodiments only.

## Claims

1. Key of a vehicle, wherein the key (100, 200) comprises a memory (120, 220) storing data for a navigation device (710) of the vehicle wherein the data comprise instructions for execution by the navigation device and/or map data to be used by the navigation device,
**characterized in that**
at least a part of the data is compressed, and
the key comprises access means which is configured to perform decompressing of the at least a part of the data, and
electronic verification data are stored in the memory of the key, wherein the electronic verification data comprise a hash value which is computed based on the instructions and/or the map data stored in the memory of the key,
wherein the key has a bit comprising electrically conducting material,
wherein the key (100, 200) further comprises an interface (130, 230) configured to provide access to the data stored in the memory (120, 220) of the key, wherein the interface is configured to enable access via a wired data connection, and wherein the interface is the bit of the key.

2. Key according to claim 1, wherein at least a part of the data is encrypted and/or compressed, and/or accessing the data requires providing a password, the password being verified by access means comprised in the key and configured to verify the password.

3. Key according to one of the preceding claims, wherein the key (100, 200) comprises at least one verification feature which allows verifying the key by a verification device (730, 530), wherein the at least one verification feature includes electronic verification data comprising the hash value.

4. System for providing a navigation service to a user of a key of a vehicle, comprising:
a key according to one of the claims 1 - 3; and
a navigation device for a vehicle, wherein the navigation device is configured to provide a navigation service using data stored in the memory of a key of a vehicle,
wherein the navigation device is configured to obtain data from an interface of the key which are decompressed by access means comprised in the key, and
wherein the system further comprises a verification device configured to verify the key.

5. System according to claim 4, wherein the navigation device is configured to perform copying data obtained from the key (100, 200) to a memory of the navigation device.

6. System according to one of the claims 4 - 5, wherein the navigation device (710, 510) is configured to execute instructions stored in the memory of the key (100, 200 and/or to access map data stored in the memory (120, 220) of the key to provide the navigation service.

7. System according to one of the claims 4 - 6, wherein the navigation device (710) has a memory (720) which is configured to store at least a part of the instructions to be executed and/or of the map data to be used.

8. System according to one of the claims 4 - 7, wherein the navigation device is configured to use instructions and map data to provide the navigation service, and the navigation service is provided only if a first version descriptor associated with the instructions to be used corresponds to a second version descriptor associated with the map data to be used.

9. System according to one of the claims 4 - 8 wherein the verification device (730, 530) is configured to verify the key (100, 200) via at least one verification feature, wherein the at least one verification feature includes electronic verification data comprising the hash value stored in the memory of the key.

10. System according to claim 9, wherein the verification device (730, 530) is configured to provide a data connection (520, 750) between the interface (130, 230) of the key and the navigation device (710, 510).

11. System according to one of the claims 9 - 10, wherein the verification device (730, 530) is configured to forward data obtained from the key (100, 200) to the navigation device (710, 510).

12. System according to claim 11, wherein the navigation device (710) is configured to store data forwarded by the verification device (730) in a memory (720) of the navigation device (710). ;

13. Method of providing a navigation service to the user of a key of a vehicle according to one of them, the method comprising:
copying data from the key to a memory of a navigation device,
accessing data obtained from the memory of the key, wherein the data comprise instructions for execution by the navigation device, and/or map data for use by the navigation device,
executing the obtained instructions and/or accessing the obtained map data by the navigation device to provide the navigation service,
wherein copying data comprises decompressing of the data by the access means, and
accessing data further comprises accessing electronic verification data, wherein the electronic verification data comprise a hash value which is computed based on the instructions and/or the map data stored in the memory of the key.

## Patentansprüche

1. Schlüssel eines Fahrzeugs, wobei der Schlüssel (100, 200) einen Speicher (120, 220) umfasst, der Daten für ein Navigationsgerät (710) des Fahrzeugs speichert, wobei die Daten Anweisungen zur Ausführung durch das Navigationsgerät und/oder Kartendaten, die von dem Navigationsgerät verwendet werden, umfassen,
**dadurch gekennzeichnet, dass**
mindestens ein Teil der Daten komprimiert ist und
der Schlüssel Zugriffsmittel umfasst, die so konfiguriert sind, dass sie das Dekomprimieren des mindestens einen Teils der Daten ausführen, und
im Speicher des Schlüssel elektronische Verifikationsdaten gespeichert sind, wobei die elektronischen Verifikationsdaten einen Hashwert umfassen, der aufgrund der im Speicher des Schlüssels gespeicherten Anweisungen und/oder Kartendaten berechnet wird,
wobei der Schlüssel einen Bart aufweist, der elektrisch leitfähiges Material umfasst,
wobei der Schlüssel (100, 200) ferner eine Schnittstelle (130, 230) umfasst, die so konfiguriert ist, dass sie Zugriff auf die im Speicher (120, 220) des Schlüssels gespeicherten Daten bereitstellt, wobei die Schnittstelle so konfiguriert ist, dass sie Zugriff über eine verdrahtete Datenverbindung ermöglicht, und
wobei die Schnittstelle der Bart des Schlüssels ist.

2. Schlüssel nach Anspruch 1, wobei mindestens ein Teil der Daten verschlüsselt und/oder komprimiert ist und/oder der Zugriff auf die Daten das Bereitstellen eines Kennworts erfordert, wobei das Kennwort durch Zugriffsmittel verifiziert wird, die im Schlüssel enthalten und zum Verifizieren des Kennworts konfiguriert sind.

3. Schlüssel nach einem der vorhergehenden Ansprüche, wobei der Schlüssel (100, 200) mindestens ein Verifikationsmerkmal umfasst, das das Verifizieren des Schlüssels durch ein Verifikationsgerät (730, 530) ermöglicht, wobei das mindestens eine Verifikationsmerkmal elektronische Verifikationsdaten beinhaltet, die den Hashwert umfassen.

4. System zum Bereitstellen eines Navigationsdienstes für einen Besitzer eines Schlüssels eines Fahrzeugs, wobei das System Folgendes umfasst:
einen Schlüssel nach einem der Ansprüche 1 - 3 und
ein Navigationsgerät für ein Fahrzeug, wobei das Navigationsgerät so konfiguriert ist, dass es einen Navigationsdienst bereitstellt, indem es Daten verwendet, die im Speicher eines Schlüssels eines Fahrzeugs gespeichert sind,
wobei das Navigationsgerät so konfiguriert ist, dass es Daten von einer Schnittstelle des Schlüssels abruft, die durch im Schlüssel enthaltene Zugriffsmittel dekomprimiert werden, und
wobei das System ferner ein Verifikationsgerät umfasst, das so konfiguriert ist, dass es den Schlüssel verifiziert.

5. System nach Anspruch 4, wobei das Navigationsgerät so konfiguriert ist, dass es das Kopieren von Daten, die vom Schlüssel (100, 200) abgerufen werden, auf einen Speicher des Navigationsgeräts ausführt.

6. System nach einem der Ansprüche 4 - 5, wobei das Navigationsgerät (710, 510) so konfiguriert ist, dass es Anweisungen ausführt, die im Speicher des Schlüssels (100, 200) gespeichert sind und/oder auf Kartendaten zugreift, die im Speicher (120, 220) des Schlüssels gespeichert sind, um den Navigationsdienst bereitzustellen.

7. System nach einem der Ansprüche 4 - 6, wobei das Navigationsgerät (710) einen Speicher (720) aufweist, der so konfiguriert ist, dass er mindestens einen Teil der auszuführenden Anweisungen und/oder der zu verwendenden Kartendaten speichert.

8. System nach einem der Ansprüche 4 - 7, wobei das Navigationsgerät so konfiguriert ist, dass es Anweisungen und Kartendaten verwendet um den Navigationsdienst bereitzustellen, und der Navigationsdienst nur bereitgestellt wird, wenn ein erster Versionsdeskriptor, der den zu verwendenden Anweisungen zugeordnet ist, mit einem zweiten Versionsdeskriptor übereinstimmt, der den zu verwendenden Kartendaten zugeordnet ist.

9. System nach einem der Ansprüche 4 - 8, wobei das Verifikationsgerät (730, 530) so konfiguriert ist, dass es den Schlüssel (100, 200) über mindestens ein Verifikationsmerkmal verifiziert, wobei das mindestens eine Verifikationsmerkmal elektronische Verifikationsdaten einschließt, die den im Speicher des Schlüssels gespeicherten Hashwert umfassen.

10. System nach Anspruch 9, wobei das Verifikationsgerät (730, 530) so konfiguriert ist, dass es eine Datenverbindung (520, 750) zwischen der Schnittstelle (130, 230) des Schlüssels und dem Navigationsgerät (710, 510) bereitstellt.

11. System nach einem der Ansprüche 9 - 10, wobei das Verifikationsgerät (730, 530) so konfiguriert ist, dass es vom Schlüssel (100, 200) abgerufene Daten an das Navigationsgerät (710, 510) weiterleitet.

12. System nach Anspruch 11, wobei das Navigationsgerät (710) so konfiguriert ist, dass es vom Verifikationsgerät (730) weitergeleitete Daten in einem Speicher (720) des Navigationsgeräts (710) speichert.

13. Verfahren zum Bereitstellen eines Navigationsdienstes für den Besitzer eines Schlüssels eines Fahrzeugs nach einem der Ansprüche 1-3, wobei das Verfahren Folgendes umfasst:
Kopieren von Daten vom Schlüssel in einen Speicher eines Navigationsgerätes,
Zugreifen auf Daten vom Speicher des Schlüssels, wobei die Daten Anweisungen für das Ausführen durch das Navigationsgerät und/oder Kartendaten zur Verwendung durch das Navigationsgerät umfassen,
Ausführen der abgerufenen Anweisungen und/oder Zugreifen auf die abgerufenen Kartendaten durch das Navigationsgerät, um den Navigationsdienst bereitzustellen,
wobei das Kopieren der Daten das Dekomprimieren der Daten durch das Zugriffsmittel umfasst und
das Zugreifen auf die Daten ferner das Zugreifen auf elektronische Verifikationsdaten umfasst, wobei die elektronischen Verifikationsdaten einen Hashwert umfassen, der aufgrund der im Speicher des Schlüssels gespeicherten Anweisungen und/oder Kartendaten berechnet wird.

## Revendications

1. Clé de véhicule, cette clé (100, 200) contenant une mémoire (120, 220) conservant des données destinées à un dispositif de navigation (710) du véhicule, les données comprenant des instructions, destinées à être exécutées par le dispositif de navigation, et/ou des données cartographiques, que doit utiliser le dispositif de navigation,
**caractérisée en ce que**
au moins une partie des données est compressée, et
**en ce que** la clé comprend un moyen d'accès configuré pour effectuer une décompression de l'au moins une partie des données, et
**en ce que** les données de vérification électronique sont conservées dans la mémoire de la clé, les données de vérification électronique comprenant une empreinte numérique calculée selon les instructions et/ou les données cartographiques conservées dans la mémoire de la clé,
la clé contenant un élément particulier comportant un matériau conducteur de l'électricité,
la clé (100, 200) comprenant en outre une interface (130, 230) configurée pour donner accès aux données conservées dans la mémoire (120, 220) de la clé, l'interface étant configurée pour donner accès, par le biais d'une connexion câblée pour données, et l'interface constituant l'élément particulier de la clé.

2. Clé selon la revendication 1, dans laquelle au moins une partie des données est cryptée et/ou compressée, et/ou l'accès aux données nécessite l'apport d'un mot de passe, le mot de passe étant vérifié par un moyen d'accès contenu dans la clé et configuré pour vérifier le mot de passe.

3. Clé selon l'une des revendications précédentes, la clé (100, 200) contenant au moins un élément de vérification permettant de vérifier la clé grâce à un dispositif de vérification (730, 530), l'au moins un élément de vérification comprenant des données de vérification électronique contenant l'empreinte numérique.

4. Système permettant de proposer un service de navigation à l'utilisateur de la clé d'un véhicule, comprenant :
une clé selon l'une des revendications 1 à 3, et
un dispositif de navigation destiné à un véhicule, ce dispositif de navigation étant configuré pour procurer un service de navigation utilisant des données conservées dans la mémoire de la clé d'un véhicule,
dans lequel le dispositif de navigation est configuré pour obtenir des données à partir d'une interface de la clé, qui sont décompressées par un moyen d'accès contenu dans la clé, et
dans lequel le système comprend en outre un dispositif de vérification configuré pour vérifier la clé.

5. Système selon la revendication 4, dans lequel le dispositif de navigation est configuré pour effectuer la copie de données provenant de la clé (100, 200) vers une mémoire du dispositif de navigation.

6. Système selon l'une des revendications 4 ou 5, dans lequel le dispositif de navigation (710, 510) est configuré pour exécuter des instructions conservées dans la mémoire de la clé (100, 200) et/ou pour accéder à des données cartographiques conservées dans la mémoire (120, 220) de la clé, afin de procurer le service de navigation.

7. Système selon l'une des revendications 4 à 6, dans lequel le dispositif de navigation (710) contient une mémoire (720) qui est configurée pour conserver au moins une partie des instructions à exécuter et/ou des données cartographiques à utiliser.

8. Système selon l'une des revendications 4 à 7, dans lequel le dispositif de navigation est configuré pour utiliser des instructions et des données cartographiques afin de procurer le service de navigation, et où le service de navigation n'est proposé que si un premier descripteur de version associé aux instructions à utiliser correspond à un deuxième descripteur de version associé aux données cartographiques à employer.

9. Système selon l'une des revendications 4 à 8, dans lequel le dispositif de vérification (730, 530) est conçu pour vérifier la clé (100, 200) par le biais d'au moins un élément de vérification, dans lequel l'au moins un élément de vérification comprend des données de vérification électronique contenant l'empreinte numérique conservée dans la mémoire de la clé.

10. Système selon la revendication 9, dans lequel le dispositif de vérification (730, 530) est configuré pour fournir une connexion de données (520, 750) entre l'interface (130, 230) de la clé et le dispositif de navigation (710, 510).

11. Système selon l'une des revendications 9 ou 10, dans lequel le dispositif de vérification (730, 530) est configuré pour transmettre des données obtenues à partir de la clé (100, 200) vers le dispositif de navigation (710, 510).

12. Système selon la revendication 11, dans lequel le dispositif de navigation (710) est configuré pour conserver des données transmises par le dispositif de vérification (730) dans une mémoire (720) du dispositif de navigation (710).

13. Procédé d'obtention d'un service de navigation par l'utilisateur de la clé d'un véhicule selon l'une des revendications 1 à 3, ce procédé comprenant :
la copie de données de la clé vers la mémoire d'un dispositif de navigation,
l'accès à des données obtenues à partir de la mémoire de la clé, ces données comprenant des instructions, que doit exécuter le dispositif de navigation, et/ou des données cartographiques,
que doit utiliser le dispositif de navigation,
l'exécution des instructions obtenues et/ou l'accès aux données cartographiques obtenues par le dispositif de navigation, afin de procurer le service de navigation,
la copie de données comprenant la décompression des données par le moyen d'accès, et
l'accès aux données comprenant en outre l'accès à des données de vérification électronique,
les données de vérification électronique comprenant une empreinte numérique qui est calculée en fonction des instructions et/ou des données cartographiques conservées dans la mémoire de la clé.
